Europäisches Patentamt

European Patent Office

Office européen des brevets

(19)

(11) Veröffentlichungsnummer: **0 185 195
B1**

(12) **EUROPÄISCHE PATENTSCHRIFT**

(45) Veröffentlichungstag der Patentschrift: **11.07.90**

(51) Int. Cl.⁵: **H 04 N 5/235**

(21) Anmeldenummer: **85114403.0**

(22) Anmeldetag: **13.11.85**

(54) Schaltung zur Weisskompression eines Videosignals.

(30) Priorität: **21.12.84 DE 3446821**

(43) Veröffentlichungstag der Anmeldung:
**25.06.86 Patentblatt 86/26**

(45) Bekanntmachung des Hinweises auf die
Patenterteilung:
**11.07.90 Patentblatt 90/28**

(84) Benannte Vertragsstaaten:
**DE FR GB NL**

(56) Entgegenhaltungen:
**US-A-3 988 776**

(73) Patentinhaber: **ROBERT BOSCH GMBH
Postfach 50
D-7000 Stuttgart 1 (DE)**

(72) Erfinder: **Zappen, Hans Wilhelm, Dipl.-Ing.
Knodener Strasse 18
D-6140 Bensheim (DE)**
Erfinder: **Rau, Ernst, Dipl.-Ing.
Kölner Ring 43
D-4770 Soest (DE)**

## Beschreibung

### Stand der Technik

Die Erfindung geht aus von einer Schaltung zur Weißkompression eines Videosignals nach der Gattung des Hauptanspruchs.

Außenaufnahmen mit Hilfe von Reportagekameras können häufig nur unter extremen Lichtverhältnissen gemacht werden. Dabei kann es leicht vorkommen, daß Bildteile stark übersteuert werden. Zur Vermeidung dieser Übersteuerung hat sich eine Dynamik-Kompression der weißen Bildteile als notwendig erwiesen (siehe US-A-3 988 776).

Bisher war es üblich, einen konstanten Einsatzpunkt der Kompression vorher festzulegen, unabhängig davon, ob in der folgenden Szene mit einem Überpegel zu rechnen ist oder nicht. Dabei wurde das Eingangssignal nur bis zu einem Pegel von ca. 80% linear übertragen, danach bis zu einem Pegel von ca. 105% nichtlinear, d.h. auch bereits Pegelwerte zwischen 80% und 100% wurden nicht mehr linear übertragen, sondern komprimiert.

Der vorliegenden Erfindung liegt daher die Aufgabe zugrunde, eine Schaltung der eingangs genannten Art so zu gestalten, daß anstelle des starren Einsatzpunktes ein vom Videosignal abhängiger variabler Kompressionseinsatz möglich ist.

### Vorteile der Erfindung

Die erfindungsgemäße Schaltung mit den kennzeichnenden Merkmalen des Hauptanspruchs hat den Vorteil, daß im, Normalbetrieb ein Aussteuerbereich bis ca. 100% linear zur Verfügung steht und erst bei diesen überschreitenden Werten allmählich eine Weißkompression einsetzt, durch welche der lineare Bereich von ca. 100% bis ca. 80% eingeschränkt wird. Bei einem Überpegel von z.B. 120% kann der Einsatzpunkt der Kompression bei ca. 95% liegen, während er bei einem Überpegel von z.B 500% auf ca. 80% abgesunken sein wird, d.h. bis zu einem Pegel von 80% wird das Videosignal linear und danach bis zu einem Pegel von ca. 105% nichtlinear übertragen.

Durch die in den Unteransprüchen aufgeführten Maßnahmen sind vorteilhafte Weiterbildungen und Verbesserungen der im Hauptanspruch angegebenen Schaltung möglich.

### Zeichnung

Ein Ausführungsbeispiel der Erfindung ist in der Zeichnung dargestellt und in der nachfolgenden Beschreibung näher erläutert. Es zeigen:

Fig. 1 eine erfindungsgemäße Schaltung,

Fig. 2 Spannungs-Zeit-Diagramme der in Figur 1 vorkommenden Signale.

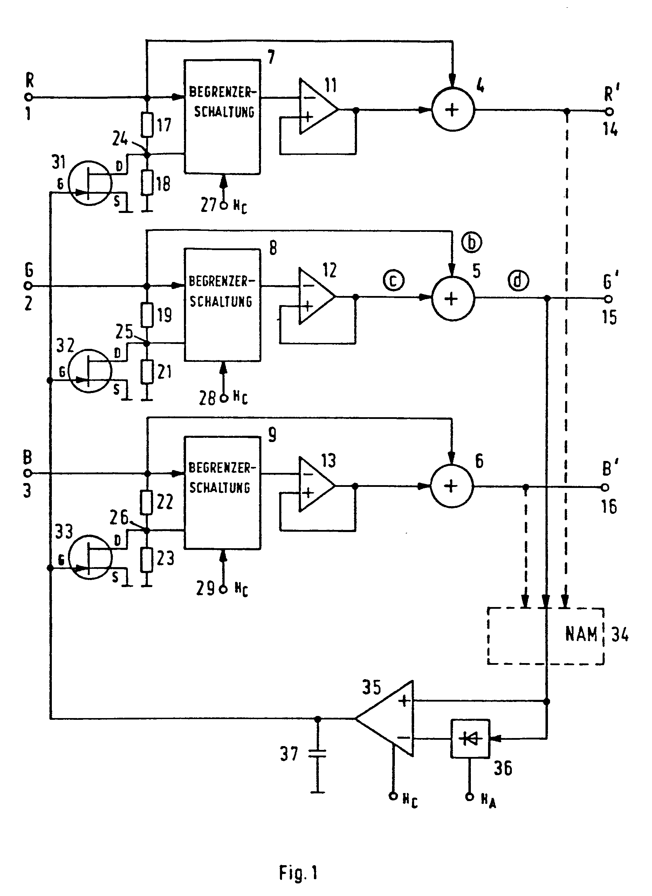

In Figur 1 ist eine sogenannte "Knie-Begrenzerschaltung" für jeden Farbkanal (R, G, B) einer Farbfernsehkamera dargestellt. An jeder der Klemmen 1, 2, 3 liegt jeweils das von den optoelektrischen Wandlern abgegebene und in einem Vorverstärker verarbeitete Videosignal mit in der Austastlücke enthaltenem Weißimpuls W (100%-Pegel) als Farbwertsignal R bzw. G bzw. B. Diese Signale werden nun einerseits direkt dem einen Eingang je einer Addierstufe 4 bzw. 5 bzw. 6 zugeführt und andererseits an je 8 eine Begrenzerschaltung 7 bzw. 8 bzw. 9 angelegt, deren Ausgang über je eine Inverterschaltung 11 bzw. 12 bzw. 13 mit dem anderen Eingang der Addierstufe 4 bis 6 verbunden ist. An den Ausgangklemmen 14 bzw. 15 bzw. 16 ist jeweils ein weißbegrenztes Videosignal R', G', B' zur weiteren Verarbeitung und Verstärkung abnehmbar.

Die Festsetzung des Kompressions-Einsatzpunktes ist mit Hilfe der am Eingang jeder Begrenzerschaltung 7, 8, 9 angeordneten einstellbaren Widerstände 17, 18 bzw. 19, 21 bzw. 22, 23 möglich. Bisher wurden dabei diese Widerstände so dimensioniert, daß in jedem Falle bereits bei einem Pegel von ca. 80% der lineare Übertragungsbereich endete und der nichtlineare begann. Dabei wurde am Verbindungspunkt 24 bzw. 25 bzw. 26 der Widerstände 17, 18 bzw. 19, 21 bzw. 22, 23 ein Klemm-Referenz-Potential von ca. 20% eingestellt, so daß mit Hilfe der an den Klemmen 27 bzw. 28 bzw. 29 anliegenden Klemmimpulse $H_C$ das Videosignal bei einem Pegel von ca. 80% geklemmt, d.h. auf 0 V gebracht wurde. Bei dieser bekannten Schaltung erfolgte damit die Übertragung von Videosignalen mit Pegelwerten zwischen 80% und 100% nicht mehr linear, sondern bereits komprimiert.

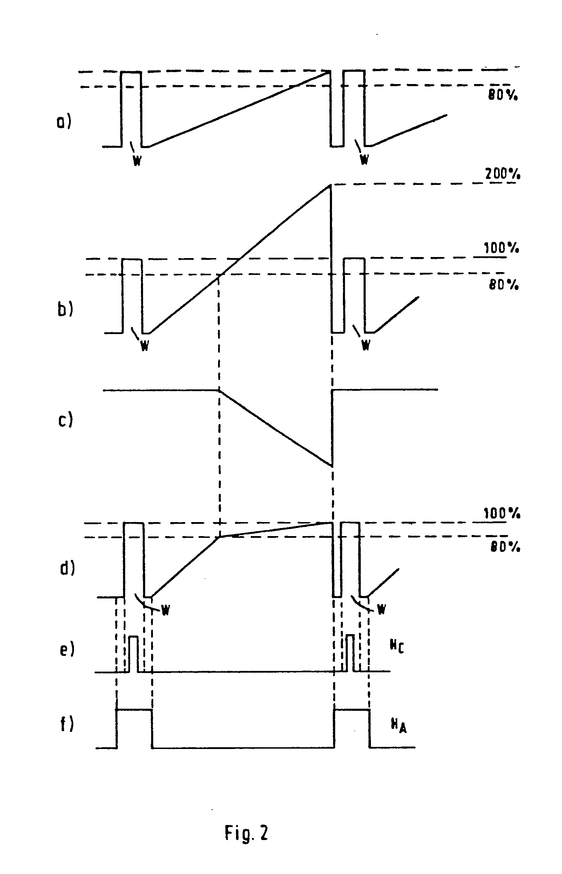

Zur Vermeidung dieser zu früh einsetzenden Weißkompression sind die Teilerverhältnisse der Widerstände 17, 18 bzw. 19, 21 bzw. 22, 23 erfindungsgemäß mit Hilfe je eines Feldeffekttransistors 31 bzw. 32 bzw. 33 steuerbar, welche in Abhängigkeit vom Videosignal geregelt werden. Dazu wird entweder vom Ausgangsvideosignal G' oder über eine (in der Figur gestrichelt dargestellte) Nicht-Additive-Mischschaltung 34 vom jeweils größten Ausgangsvideosignal mit Hilfe eines Komparators 35 (OTA) eine Regelspannung für die Feldeffekttransistoren 31, 32, 33 erzeugt. Das Ausgangsvideosignal mit Weißimpuls W gemäß Figur 2a bzw. 2b wird hierbei einerseits dem nichtinvertierenden Eingang des Komparators 35 und andererseits einer Spitzengleichrichterstufe 36 zugeführt, in welcher durch Anlegen eines Austastimpulses $H_A$ gemäß Figur 2f der Weißimpuls W ausgetastet und somit nur das anliegende Bildsignal gleichgerichtet wird. Letzteres wird danach mit dem Videosignal während der Klemmzeit, also mit dem den 100%-Pegel repräsentierenden Weißimpuls W verglichen. Während der aktiven Bilddauer wird dieser Zustand durch einen Haltekondensator 37 überbrückt. Übersteigt das gleichgerichtete Videosignal diesen Referenzpegel nicht, so gibt der Komparator 35 eine positive Gleichspannung ab. Dadurch sind die Feldeffekttransistoren 31, 32, 33 leitend, und die Verbindungspunkte 24, 25, 26 sind auf Bezugspotential gelegt.

Ein Eingangsvideosignal gemäß Figur 2a, dessen Maximalamplitude bis zu einem Pegel von ca. 100% reicht, wird daher ohne Begrenzung bzw.

2

Kompression linear übertragen. Somit wird dabei der zur Verfügung stehende Aussteuerbereich vollständig ausgenutzt.

Bei Anlegen eines den 100%-Pegel übersteigenden Videosignals gemäß Figur 2b an die Eingangsklemmen 1, 2, 3 sinkt die den Feldeffekttransistoren 31, 32, 33 zugeführte Gleichspannung zunächst auf Bezugspotential und wird danach zunehmend negativ, wodurch die Feldeffekttransistoren 31, 32, 33 zunehmend gesperrt werden. Dadurch stellt sich allmählich das feste Teilerverhältnis ein, welches den Einsatzpunkt der Kompression auf ca. 80%-Pegel verschiebt. In den Begrenzerschaltungen 7 bzw. 8 bzw. 9 wird daher ein diesen bei 80% liegenden Pegel übersteigender Signalanteil gemäß Figur 2b abgeschnitten und in den Inverterstufen 11 bzw. 12 bzw. 13 gemäß Figur 2c invertiert. Anschließend wird dieser invertierte Signalanteil nach Figur 2c dem Eingangsvideosignal in den Addierstufen 4, 5, 6 hinzuaddiert, so daß an den Ausgängen 14, 15, 16 je ein Signal gemäß Figur 2d entsteht, dessen-Kompressions-Einsatzpunkt durch die Widerstandsteiler 17 biz 23 und dessen Signalsteigung im Kompressionsbereich durch die Verstärkung der Inverterstufen 11, 12, 13 bestimmt wird.

## Patentansprüche

1. Schaltung zur Weiß-Kompression der über dem Normpegel von ca. 100% liegenden Anteile eines Videosignals auf einen sich automatisch zwischen 80% und 100% einstellenden Pegel mit einer im Videosignalweg angeordneten KnieBegrenzerschaltung, deren Einsatzpunkt zur Kompression in Abhängigkeit vom den Normpegel übersteigenden Signal-pegel geregelt wird, wobei durch Vergleich des gleichgerichteten Bildsignals mit Austastung (BA-Signal) mit dem einen Weißimpuls in der Austastlücke enthaltenden Videosignal eine Spannung abgeleitet wird, mit der eine am Eingang der Begrenzerschaltung angeordnete steuerbare Impedanz geregelt wird.

2. Schaltung nach Anspruch 1, dadurch gekennzeichnet, daß die steuerbare Impedanz aus der Reihenschaltung zweier zwischen dem Videosignalweg und Bezugspotential angeordneten Widerstände (17, 18 bzw. 19, 21 bzw. 21, 23) und einem zwischen dem Verbindungspunkt 24 bzw. 25 bzw. 26 der Widerstände und Bezugspotential geschalteten Feldeffekttransistor (31 bzw. 32 bzw. 33) besteht, an dessen Steuerelektrode die Regelspannung angelegt ist.

3. Schaltung nach Anspruch 1, dadurch gekennzeichnet, daß das Videoausgangssignal der Knie-Begrenzerschaltung einerseits direkt dem nichtinvertierenden Eingang eines Differenzverstärkers (35) und andererseits einer mit Austastimpulsen (H$_A$) gesteuerten Gleichrichterstufe (36) zugeführt wird, deren Ausgang mit dem invertierenden Eingang des Differenzverstärkers (35) verbunden ist, an dessen Ausgang die Regelspannung abnehmbar ist.

4. Schaltung nach Anspruch 1 zur Verarbeitung von Farbfernsehsignalen, dadurch gekennzeichnet, daß das Videoausgangssignal der Knie-Begrenzerschaltung zur Regelspannungserzeugung über eine Nicht-Additive-Miachschaltung (34) geführt ist.

## Revendications

1. Circuit pour la compression du blanc de la composante d'un signal vidéo qui se situe au-delà du niveau normal d'environ 100% jusqu'à un niveau se réglant automatiquement entre 80% et 100% avec un circuit de limitation à deux pentes prévu dans le chemin du signal vidéo, dont le point de mise en oeuvre pour la compression se règle en fonction du niveau du signal dépassant le niveau normal, dans lequel, par comparaison du signal-image redressé avec élimination (signal BA) avec un signal vidéo contenant une impulsion de blanc dans l'intervalle de suppression, pour dériver une tension qui règle une impédance commandée prévue à l'entrée du circuit-limiteur.

2. Circuit selon la revendication 1, caractérisé en ce que l'impédance commandée est formée du montage en série de deux résistances (17, 18 ou 19, 21 ou 21, 23) prévues entre le chemin du signal vidéo et le potentiel de référence ainsi qu'un transistor à effet de champ (31, 32 ou 33) prévu entre le point de jonction (24, 25, 26) des résistances et le potentiel de référence, l'électrode de commande de ce transistor recevant la tension de réglage.

3. Circuit selon la revendication 1, caractérisé en ce que le signal de sortie vidéo du circuit-limiteur à deux pentes est d'une part relié directement à l'entrée non inversée d'un amplificateur différentiel (35) et d'autre part à un étageredresseur (36) commandé par les impulsions de suppression (H$_A$), étage-redresseur dont la sortie est reliée à l'entrée d'inversion de l'amplificateur de différence (35) dont la sortie fournit la tension de réglage.

4. Circuit selon la revendication 1 pour traiter les signaux vidéo couleur, caractérisé en ce que le signal de sortie vidéo du circuit-limiteur à deux pentes est appliqué pour créer une tension de réglage par l'intermédiaire d'un circuit-mélangeur non additif (34).

## Claims

1. Circuit for the white compression of the video signal component above the normal level of approximately 100% to a level set automatically at between 80 and 100% with a knee limiter circuit located in the video signal branch and whose compression application point is regulated as a function of the signal level exceeding the normal level, wherein by comparing the rectified image signal with blanking (picture plus blanking signal) with the video signal containing a white pulse in the blanking interval, a voltage is derived enabling the controllable impedance positioned at the limiter circuit input to be regulated.

2. Circuit according to claim 1, characterized in that the controllable impedance comprises the series connection of two resistors (17, 18 or 19, 21 or 21, 23) positioned between the video signal branch and the reference potential and a field effect transistor (31 or 32 or 33) connected between the connecting point (24 or 25 or 26) of the resistors and the reference potential and to whose control electrode is applied the control voltage.

3. Circuit according to claim 1, characterized in that the video output signal of the knee limiter circuit is on the one hand supplied directly to the non-inverting input of a differential amplifier (35) and on the other hand to a rectifier stage (36) controlled with the blanking pulses (H$_A$) and whose output is connected to the inverting input of the differential amplifier (35), from whose output can be taken the control voltage.

4. Circuit according to claim 1 for processing colour television signals, characterized in that the video output signal of the knee limiter circuit is passed across a non-additive mixing circuit (34) for generating the control voltage.

Fig. 1

Fig. 2

2